# EUROPEAN PATENT SPECIFICATION

(11) **EP 2 657 625 B1**
(45) Date of publication and mention of the grant of the patent: **15.07.2015**
(21) Application number: 10861028.8
(22) Date of filing: 24.12.2010
(51) Int. Cl.: F25B 1/00, F25B 1/02, F25B 25/00, F25B 31/00, F25B 49/02

(54) **METHOD AND DEVICE FOR CONTROLLING OPERATION OF HEAT PUMP DEVICE**
VERFAHREN UND VORRICHTUNG ZUR STEUERUNG DES BETRIEBS EINER WÄRMEPUMPENVORRICHTUNG
PROCÉDÉ ET DISPOSITIF POUR RÉGULER LE FONCTIONNEMENT D'UN DISPOSITIF DE POMPE À CHALEUR

(43) Date of publication of application: 30.10.2013
(73) Proprietor: Mayekawa Mfg. Co., Ltd., Koto-ku Tokyo 135-8482 (JP)
(72) Inventor: KUDO, Takanori, Tokyo 135-8482 (JP); ARATA, Noriyuki, Tokyo 135-8482 (JP); USHIROKAWA, Hiroshi, Tokyo 135-8482 (JP); FUKANO, Shuji, Tokyo 135-8482 (JP); NAKAJIMA, Hisashi, Tokyo 135-8482 (JP)
(74) Representative: Regimbeau
(86) International application number: PCT/JP2010/073459
(87) International publication number: WO 2012/086089

(56) References cited:
- EP-A1- 1 475 576
- WO-A1-2006/112322
- WO-A1-2010/119591
- JP-A- 5 180 518
- JP-A- 9 004 933
- JP-A- 10 009 690
- JP-A- 2002 277 075
- JP-A- 2003 065 616
- JP-A- 2003 232 580
- JP-A- 2004 108 683
- JP-A- 2005 172 249
- JP-A- 2006 194 565
- JP-A- 2006 329 445
- JP-A- 2008 070 060
- JP-A- 2008 298 406

## Description

### TECHNICAL FIELD

The present invention relates to an operation control method and an operation control unit that implement the stable supply of high-temperature water or low-temperature water at desired temperature by means of a heat pump unit that uses an NH3 refrigerant.

### BACKGROUND ART

From the viewpoint of global environmental protection, natural refrigerants having a small ozone depletion potential (ODP) and a small global warming potential (GWP) have been conventionally promoted as operation refrigerants for heat pump units instead of chlorofluorocarbons. Since CO₂ serving as a natural refrigerant has a small ODP of 0 and a small GWP of 1, allows high-temperature hot-water supply, and has high COP, it has been practically used in hot-water supply machines for home and business uses.

Document JP 2006 329445 A discloses a heat pump unit that uses ammonia or CO₂ as a refrigerant. The capacity of the heat pump is varied by controlling the revolution speed of the compressor motor.

However, the CO₂ refrigerant has higher pressure than general refrigerants at ambient atmospheric temperature and thus cannot be used in existing equipment. Therefore, equipment supporting the pressure of CO₂ is required to be newly constructed besides a pipe system, which gives rise to the problem that an equipment expense becomes high. In view of this, heat pump units that use an NH3 refrigerant serving as a natural refrigerant, having an ODP of 0 and a GWP of nearly equal to 0, having high latent heat of evaporation, and having high cooling or heating performance have been commercially available and practically used as energy-saving alternate boiler functions for producing high-temperature water.

Patent Documents 1 and 2 disclose heat pump units that use an NH₃ refrigerant.

Patent Document 1: Japanese Patent Application Laid-open No. 2008-255919 Patent Document 2: WO 2010/13590

High-temperature water produced by the heat pump unit is used for heating, hot-water supply, industrial process heating, washing, disinfection, snow melting, or the like. In such a use, an operation for continuously supplying hot water at fixed temperature is required. In addition, if the load is decreased, the temperature of the water circulated from the side of the load is increased. Therefore, the capacity control of the heat pump unit is required. Moreover, the cooling or heating performance of the heat pump unit becomes different depending on changes in the heat source and the ambient temperature of the heat pump unit. Therefore, operation control corresponding to such changes is required. In order to continuously supply hot water at fixed temperature, the proportional control of the capacity of a compressor is required according to fluctuations in the load and the ambient temperature.

Further, in order to produce high-temperature water at 50 to 100°C, the pressure of the NH₃ refrigerant exceeds 1.5 MPa on the low-pressure side and 5 MPa on the high-pressure side of a heat pump cycle. Therefore, the pressure of the refrigerant depends on fluctuation factors such as operation conditions and ambient temperature, which gives rise to the problem that the refrigerant-side surface temperature of an inlet pipe, the compressor, and an outlet pipe at the stop and that of the inlet pipe and the compressor during the operation fall below the saturation temperature of the pressure of the NH₃ refrigerant gas to liquefy the NH₃ refrigerant gas.

Furthermore, if the pressure of the NH₃ refrigerant gas of the inlet path of the compressor is increased, the temperature of the inlet pipe cannot follow such an increase, which results in the likelihood of the high-temperature NH₃ refrigerant gas being brought into contact with the inlet pipe and liquefied. In case that the compressor sucks the liquefied refrigerant in, the metal contact of a piston, a piston ring, or the like occurs, which may cause damage on equipment and components.

### DISCLOSURE OF THE INVENTION

In view of the problems of the related art, the present invention has an object of allowing the supply of high-temperature water or the like at desired temperature, e.g., at 50 to 90°C at all times without degrading the COP regardless of fluctuations in the load and the surrounding environment with a heat pump unit that uses an NH₃ refrigerant.

In addition, the present invention has a second object of eliminating liquefied refrigeration flow to a compressor during an operation or at the stop of the operation and preventing damage on equipment, components, or the like constituting the compressor.

To this end, the present invention provides a method for controlling an operation of a heat pump unit that uses NH₃ as a refrigerant, has a compressor, a condenser, an expansion valve, and an evaporator, and constitutes a heat pump cycle. The method includes a first step of detecting temperature of heat-exchanging fluid at an exit of the condenser or the evaporator, the heat-exchanging fluid being heat-exchanged with the NH₃ refrigerant at the condenser or the evaporator; a second step of maintaining the temperature of the heat-exchanging fluid at the exit of the condenser or the evaporator to be within a setting range by control of, under an operation with all the cylinders, capacity of the reciprocating compressor in a period between a maximum allowable load and a minimum load for lubrication, at which a flow of a lubrication oil pump is capable of being ensured, based on revolution-speed control of the drive motor that drives the reciprocating compressor; and a third step of maintaining the temperature of the heat-exchanging fluid at the exit of the condenser or the evaporator to be within the setting range by control of the capacity of the reciprocating compressor at the minimum load for lubrication or less based on a combination of control of decreasing the number of operation cylinders and the revolution-speed control of the drive motor.

In the method of the present invention, the reciprocating compressor, which is relatively less costly and whose capacity is easily controlled, is used as a compressor. Further, while detecting the temperature of the heat-exchanging fluid at the exit of the condenser or the evaporator, the capacity of the reciprocating compressor in the period between the maximum allowable load and the minimum load for lubrication at which the flow of the lubrication oil pump is capable of being ensured is controlled based on the revolution-speed control of the drive motor under the operation with all the cylinders. In addition, in the case of such a load or less, the capacity is controlled based on the combination of the cylinder-number control and the revolution-speed control of the drive motor.

Thus, proportional control relative to the load is made possible with the COP maintained at a high level. In addition, with the proportional control relative to the load made possible, the liquefaction of the refrigerant is prevented in the inlet pipe of the compressor. Moreover, with the temperature of the heat-exchanging fluid at the exit of the condenser or the evaporator maintained so as to fall within the setting range, the production of the heat-exchanging fluid at desired high or low temperature is made possible.

Since the circulation amount of the refrigerant is decreased with a decrease in the capacity of the compressor, there is room for the evaporation performance of the evaporator. Therefore, the evaporation temperature is increased, which results in an increase in the inlet pressure. Because of this, the temperature of an inlet pipe transitionally falls below the saturation temperature of the NH₃ refrigerant, which may cause NH₃ refrigerant gas to be condensed and liquefied.

In the method of the present invention, the NH₃ refrigerant flowing into a refrigerant inlet path may be maintained at temperature not less than saturation temperature by a heating mechanism provided on the refrigerant inlet path of the reciprocating compressor in order to prevent liquefied refrigeration flow of the NH₃ refrigerant to the reciprocating compressor.

In this case, the heating mechanism may be operated in advance before the control of decreasing the capacity of the compressor. Thus, the liquefied refrigeration flow of the NH₃ refrigerant to the compressor can be reliably prevented during the operation or at the stop of the heat pump unit. Therefore, since the lubrication of equipment and components constituting the compressor can be satisfactorily ensured, the abnormal abrasion of the sliding part of the compressor can be prevented.

In the method of the present invention, the inlet path may be shut off at a stop of the heat pump unit by a shut-off valve provided on the inlet path of the reciprocating compressor in order to prevent the liquefied refrigeration flow at a start of the reciprocating compressor. In a case in which the heat source of the heat pump unit is different in various ways, the inlet path is shut off by the shut-off valve if the temperature of the compressor is low at the stop of the heat pump unit. Thus, the liquefied refrigeration flow from the inlet path to the compressor is prevented, whereby the foaming of lubricating oil and the abnormal abrasion of the sliding part of the compressor can be reliably prevented at the start of the compressor.

In the method of the present invention, the high-pressure refrigerant gas of the outlet path of the reciprocating compressor may be released to the side of the evaporator (low-pressure part) having the inlet shut-off valve at the stop of the reciprocating compressor to minimize the difference between the high pressure and the low pressure of the reciprocating compressor and prevent the liquefaction at the high-pressure part of the reciprocating compressor. The high-pressure refrigerant gas of the outlet path is released to the side of the low-pressure evaporator immediately after the stop of the reciprocating compressor, whereby the compressor outlet path side is cooled by ambient temperature and the NH₃ refrigerant inside a compression chamber is liquefied and condensed. Therefore, the risk of damaging the inner equipment of the reciprocating compressor can be reduced at the next start.

In addition, in the method of the present invention, the high-pressure refrigerant gas of the outlet path of the reciprocating compressor may be released to the side of the evaporator (low-pressure part) having the inlet shut-off valve at the start of the reciprocating compressor to minimize the difference between the high pressure and the low pressure of the reciprocating compressor and decrease the start torque of the reciprocating compressor. The smaller the pressure difference between the inlet path and the outlet path at the start of the compressor, the smaller the start torque of the drive motor of the compressor is required. Therefore, the high pressure of the outlet path of the compressor is made equal to pressure on the side of the evaporator at the start of the compressor, whereby the start torque of the drive motor can be decreased.

A unit for controlling an operation of a heat pump unit of the present invention is directly applicable to the implementation of the method of the present invention. The heat pump unit uses NH₃ as a refrigerant, has a compressor, a condenser, an expansion valve, and an evaporator, and constitutes a heat pump cycle, the compressor being a reciprocating compressor having a plurality of cylinders, a drive motor that drives pistons of the cylinders, and also having a lubrication oil pump driven by the drive motor. The heat pump unit includes a temperature sensor that detects temperature of heat-exchanging fluid at an exit of the condenser or the evaporator, the heat-exchanging fluid being heat-exchanged with the NH₃ refrigerant at the condenser or the evaporator; and a controller that maintains the temperature of the heat-exchanging fluid at the exit of the condenser or the evaporator to be within a setting range by controlling capacity of the reciprocating compressor in a period between a maximum allowable load and a minimum load for lubrication, at which a lubrication state of the reciprocating compressor is capable of being ensured with a flow of the lubrication oil pump, based on revolution-speed control of the drive motor that drives the reciprocating compressor and by controlling the capacity of the reciprocating compressor at the minimum load for lubrication or less based on a combination of the revolution-speed control of the drive motor and cylinder-number control.

In the unit of the present invention, the reciprocating compressor, which is relatively less costly and whose capacity is easily controlled, is used as a compressor. While detecting the temperature of the heat-exchanging fluid at the exit of the condenser or the evaporator, the capacity of the reciprocating compressor in the period between the maximum allowable load and the minimum load for lubrication at which the flow of the lubrication oil pump is capable of being ensured is controlled based on the revolution-speed control of the drive motor under the operation with all the cylinders. In addition, in the case of such a load or less, the capacity is controlled based on the combination of the cylinder-number control and the revolution-speed control of the drive motor.

Thus, proportional control relative to the load is made possible with the COP maintained at a high level. In addition, with the proportional control relative to the load made possible, the liquefaction of the refrigerant is prevented in the inlet pipe of the compressor. Moreover, with the temperature of the heat-exchanging fluid at the exit of the condenser or the evaporator maintained so as to fall within the setting range, the production of the heat-exchanging fluid at desired high or low temperature is made possible.

In the unit of the present invention, a heating mechanism may be provided on a refrigerant inlet path of the reciprocating compressor to maintain the NH₃ refrigerant flowing into the refrigerant inlet path at temperature not less than saturation temperature thereby preventing liquefied refrigeration flow of the NH₃ refrigerant to the reciprocating compressor. The NH₃ refrigerant is maintained at the saturation temperature or more as described above, thereby preventing the liquefaction of the NH₃ refrigerant. Thus, the liquefied refrigeration flow of the NH₃ refrigerant to the compressor can be reliably prevented during the operation or at the stop of the heat pump unit. Therefore, since the lubrication of equipment and components constituting the compressor can be satisfactorily ensured, the abnormal abrasion of the sliding part of the compressor can be prevented.

In the unit of the present invention, the heating mechanism may be a heater provided on the inlet path of the reciprocating compressor. Thus, with a simple and low-cost configuration, the liquefied refrigeration flow of the NH₃ refrigerant to the compressor can be reliably prevented.

The heating mechanism may have the inlet path of the reciprocating compressor formed into a dual-pipe structure, introduce refrigerant gas outlet from the reciprocating compressor or a refrigerant liquid on a side of the exit of the condenser into an outer pipe of the dual-pipe structure, and heat the inlet path with heat retained in the refrigerant gas or the refrigerant liquid. Thus, there is an advantage in that no special energy source is required since the heat retained in the refrigerant is used.

The heating mechanism may cause part of the refrigerant gas outlet from the compressor to be divided and poured into the inlet path thereby heating the inlet path with the heat retained in the refrigerant gas. Since the sensible heat portion of the refrigerant gas can be used for heating the inlet path, the heating efficiency can be improved.

The heating mechanism may cover the compressor with a detachable heat-insulating jacket. Thus, the installing construction can be simplified and carried out at low cost.

In the unit of the present invention, a pressure-equalizing mechanism may be provided that releases high-pressure gas in an outlet path of the reciprocating compressor to a side of the evaporator (low-pressure part) of the inlet shut-off valve at a stop or start of the reciprocating compressor. The high-pressure refrigerant gas of the outlet path is released to the side of the low-pressure evaporator immediately after the stop of the reciprocating compressor, whereby the high-pressure side of the compressor is cooled by ambient temperature and the NH₃ refrigerant on the inside is liquefied and condensed. Therefore, the risk of damaging the inner equipment of the reciprocating compressor can be reduced at the next start.

In addition, the high pressure of the outlet path is made equal to low pressure on the side of the evaporator at the start of the compressor, whereby the start torque of the drive motor can be decreased at the start.

The pressure-equalizing mechanism may have a heat exchanger provided on the outlet path of the reciprocating compressor or the condenser, cause a cooling medium to flow into the exchanger at the stop of the heat pump unit, and condense and liquefy the refrigerant gas to decrease the pressure of the refrigerant gas of the outlet path. Thus, the pressure difference between the inlet path and the outlet path of the compressor can be reduced, and the start torque of the drive motor of the compressor can be decreased. Note that the refrigerant pressure of the outlet path can be accurately regulated with the regulation of the temperature or the flow of the cooling medium. Therefore, the pressure difference between the inlet path and the outlet path can be accurately regulated.

In the unit of the present invention, a second heat pump unit having a heat-pump-cycle constituting apparatus may be provided, the evaporator of the heat pump unit may be incorporated in a high-pressure side refrigerant path of the second heat pump unit to be constituted as a cascade condenser that uses heat retained in a refrigerant of the second heat pump unit as a heat source, and pressure of the high-pressure side refrigerant path of the second heat pump unit may be regulated in order to maintain the temperature of the heat-exchanging fluid at the exit of the condenser to be within the setting range. Thus, the heat-exchanging fluid can be heated at high temperature, thereby making it possible to respond to a demand by a requestor that requires the heat-exchanging fluid at high temperature.

In addition, when the heat retained in the second heat pump unit is used as a heat source, the condensing temperature of the second heat pump unit becomes different depending on seasons, e.g., 40°C in the summer and 15°C in the winter, which greatly fluctuates the temperature of the heat source. If the condensing temperature becomes 15°C, the COP is reduced and the amount of the drawn heat is decreased, which may not allow the heat-exchanging fluid to be set at desired temperature. Conversely, with the regulation of the pressure of the high-pressure side refrigerant path of the second heat pump unit, the heat-exchanging fluid can be regulated at setting temperature.

Note that in the above configuration provided with the second heat pump unit, a condensed refrigerant liquid of the second heat pump unit may be supercooled by the cascade condenser, and the supercooled refrigerant liquid may be caused to return to a low-pressure side refrigerant circulation path of the second heat pump unit. Thus, the refrigeration effect of the second heat pump unit can be enhanced.

In addition, the cascade condenser may be arranged in parallel with a condenser of the second heat pump unit, and a flow of the refrigerant of the condenser may be regulated to regulate condensing pressure of the condenser. Thus, in the summer, some of the condensing load of the second heat pump unit is born and lightened by the cascade condenser and the condensing temperature of the refrigerant of the condenser of the second heat pump unit is decreased, while the heat source of the cascade condenser is ensured. As a result, it becomes possible to perform a high-efficiency operation with improved COP. In the winter, the condensing load of the second heat pump unit is decreased, and the ratio of the amount of heat to be used as the heat source of the cascade condenser is increased.

As a result, it becomes possible to perform the high-efficiency operation of the heat pump unit.

Accordingly, in a case in which the temperature of the heat-exchanging fluid at the exit of the condenser is variably controlled and operated so as to be increased in the heat pump unit, the condensing load is controlled in parallel with the second heat pump unit. Thus, the temperature of the condensed liquid heat-exchanged with the cascade condenser is increased, which facilitates the high-efficiency operation. With the planned control of these operation conditions in the summer and the winter, the total operation efficiencies of the heat pump unit and the second heat pump unit can be optimized throughout the year. Thus, since the temperature of the heat source corresponding to the initial condensing pressure of the heat pump unit can be ensured, the heat-exchanging fluid can be heated at the initial temperature.

In the above configuration, the cascade condenser may be arranged in series between the condenser of the second heat pump unit and the compressor, and either a flow of the refrigerant of the condenser may be regulated or condensing pressure of the condenser may be regulated by an outlet pressure regulation valve provided between the cascade condenser and the condenser. Thus, since the sensible heat portion besides the overheat portion of the refrigerant of the second heat pump unit can be effectively used, the heat source of the cascade condenser can be ensured even if the capacity of the second heat pump unit is small. In addition, the condensing pressure of the refrigerant gas of the second heat pump unit is regulated by the outlet pressure regulation valve to decrease the condensing temperature. Thus, the operation efficiency of the second heat pump unit can be improved.

According to the present invention, there is provided a method for controlling an operation of a heat pump unit that uses NH₃ as a refrigerant, has a compressor, a condenser, an expansion valve, and an evaporator, and constitutes a heat pump cycle. The method includes a first step of detecting temperature of heat-exchanging fluid at an exit of the condenser or the evaporator, the heat-exchanging fluid being heat-exchanged with the NH₃ refrigerant at the condenser or the evaporator; a second step of maintaining the temperature of the heat-exchanging fluid at the exit of the condenser or the evaporator so as to fall within a setting range by control of, under an operation with all the cylinders, capacity of the reciprocating compressor in a period between a maximum allowable load and a minimum load for lubrication at which a flow of the lubrication oil pump is capable of being ensured based on revolution-speed control of the drive motor that drives the reciprocating compressor; and a third step of maintaining the temperature of the heat-exchanging fluid at the exit of the condenser or the evaporator so as to fall within the setting range by control of the capacity of the reciprocating compressor at the minimum load for lubrication or less based on a combination of control of decreasing the number of operation cylinders and the revolution-speed control of the drive motor. Therefore, it is possible to make proportional control relative to the load while maintaining the high COP. Thus, it becomes possible to produce the heat-exchanging fluid at desired temperature and prevent the liquefaction of the refrigerant in the inlet pipe of the compressor.

According to the present invention, there is provided a unit for controlling an operation of a heat pump unit that uses NH₃ as a refrigerant, has a compressor, a condenser, an expansion valve, and an evaporator, and constitutes a heat pump cycle, the compressor being a reciprocating compressor having a plurality of cylinders, a drive motor that drives pistons of the cylinders, and a lubrication oil pump driven by the drive motor. The heat pump unit includes a temperature sensor that detects temperature of heat-exchanging fluid at an exit of the condenser or the evaporator, the heat-exchanging fluid being heat-exchanged with the NH₃ refrigerant at the condenser or the evaporator; and a controller that maintains the temperature of the heat-exchanging fluid at the exit of the condenser or the evaporator so as to fall within a setting range by controlling capacity of the reciprocating compressor in a period between a maximum allowable load and a minimum load for lubrication at which a lubrication state of the reciprocating compressor is capable of being ensured with a flow of the lubrication oil pump based on revolution-speed control of the drive motor that drives the reciprocating compressor and by controlling the capacity of the reciprocating compressor at the minimum load for lubrication or less based on a combination of the revolution-speed control of the drive motor and cylinder-number control. Therefore, it is possible to achieve the same function and the effect as those achieved according to the method of the present invention.

### BRIEF DESCRIPTION OF THE DRAWINGS

FIG. 1 is an entire configuration diagram of a heat pump unit according to a first embodiment of the method and the unit of the present invention;
FIG. 2 is an explanatory diagram showing a heating mechanism provided on a compression inlet path in the first embodiment;
FIG. 3A is a diagram showing a method for controlling the capacity of a compressor and shows a comparative example;
FIG. 3B is a diagram showing the method for controlling the capacity of the compressor and shows the capacity control of the first embodiment;
FIG. 3C is a diagram showing the method for controlling the capacity of the compressor and shows exceptional capacity control;
FIG. 4A is a diagram showing experimental data on the following capability of the temperature of hot water relative to the capacity control of the compressor;
FIG. 4B is a diagram showing experimental data on the following capability of the temperature of hot water relative to the capacity control of the compressor and shows the capacity control of the present invention;
FIG. 5 is an explanatory diagram showing another heating mechanism;
FIG. 6 is an explanatory diagram showing still another heating mechanism;
FIG. 7 is an explanatory diagram showing still another heating mechanism;
FIG. 8 is an entire configuration diagram of a heat pump unit according to a second embodiment of the method and the unit of the present invention; and
FIG. 9 is an entire configuration diagram of a heat pump unit according to a third embodiment of the method and the unit of the present invention.

### BEST MODE FOR CARRYING OUT THE INVENTION

Hereinafter, the present invention will be described in detail using embodiments shown in the figures. Note, however, that the scope of the invention is not limited thereto by the sizes, materials, shapes, relative arrangements, or the like of constituents described in the embodiments unless otherwise specifically described.

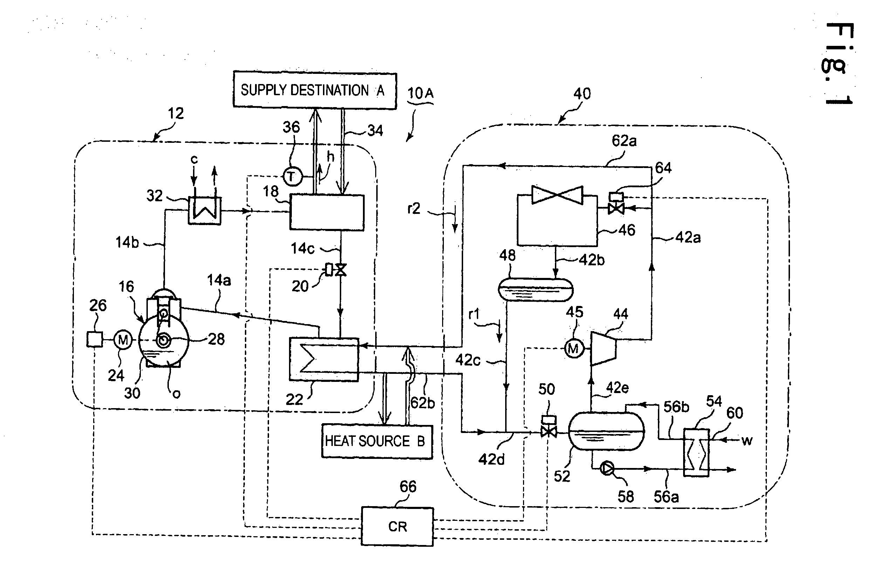

A description will be given of a first embodiment of the method and the unit of the present invention based on FIGS. 1 and 2, FIGS. 3A to 3C, and FIGS. 4A and 4B. FIG. 1 shows a heat pump unit 10A of the embodiment. The heat pump unit 10A is composed of a high-pressure side heat pump unit 12 and a low-pressure side heat pump unit 40 that use NH₃ as a refrigerant. The type of the refrigerant used in the low-pressure side heat pump unit 40 is not particularly limited. The NH₃ refrigerant may be used.

The high-pressure side heat pump unit 12 is configured to have a multi-cylinder type reciprocating compressor 16, e.g., the reciprocating compressor 16 having six cylinders, a condenser 18, an expansion valve 20, and a cascade condenser 22 on refrigerant circulation paths 14a to 14c through which the NH₃ refrigerant is circulated. The multi-cylinder type reciprocating compressor 16 has a drive motor 24, an inverter 26 that controls the number of the revolutions of the drive motor 24, and a lubrication oil pump 28 that supplies lubricating oil o remaining in a crankcase 30 to each equipment and component inside the compressor in conjunction with the revolution of a crankshaft.

The low-pressure side heat pump unit 40 is configured to have a compressor 44, a condenser 46, a receiver 48, an expansion valve 50, and a surge drum 52 on refrigerant circulation paths 42a to 42e. The type of the compressor 44 is not particularly limited. In addition, the surge drum 52 and an evaporator 54 are connected to each other by second refrigerant circulation paths 56a and 56b, and a refrigerant liquid is circulated from the surge drum 52 to the evaporator 54 by a liquid pump 58. The evaporator 54 incorporates a circulation pipe 60 through which cold water for various cooling purposes or a cooling medium w produced by a refrigerating unit (not shown) or the like is circulated, and the cooling medium w is supplied to the evaporator 54. Heat is exchanged between the refrigerant liquid and the cooling medium w in the evaporator 54, and some of the refrigerant liquid is returned to the surge drum 52 as refrigerant gas.

The refrigerant gas inside the surge drum 52 is supplied to the compressor 44 for compression and then condensed by the condenser 46. After being temporarily stored in the receiver 48, some of the condensed refrigerant liquid r1 is gasified via the expansion valve 50 and returned to the surge drum 52. Some of the refrigerant gas, r2, which passes through the refrigerant circulation path 42a, is introduced into the cascade condenser 22 of the high-pressure side heat pump unit 12 via a branch pipe 62a. The cascade condenser 22 is connected to the refrigerant circulation paths 42a to 42e so as to be in parallel with the condenser 46.

The refrigerant gas r2 introduced into the cascade condenser 22 is indirectly head-exchanged with the NH₃ refrigerant via the pipe of the cascade condenser 22 and the heat transfers to the NH₃ refrigerant. The refrigerant liquefied in the cascade condenser 22 is returned to the refrigerant circulation path 42d via a branch pipe 62b. Note that the refrigerant circulation path 42a is provided with a flow regulation valve 64 upstream of the condenser 46. By the regulation of the flow of the refrigerant gas supplied to the condenser 46 with the flow regulation valve 64, the condensing pressure of the refrigerant gas r2 supplied from the branch pipe 62a to the cascade condenser 22 is regulated.

The gasified NH₃ refrigerant heat-exchanged with the refrigerant gas r2 in the cascade condenser 22 is supplied to the multi-cylinder type reciprocating compressor 16 for compression and then condensed by the condenser 18. The condenser 18 is connected to a circulation path 34 for high-temperature water, and high-temperature water is continuously circulated from a supply destination A to the condenser 18. The NH₃ refrigerant gas is heat-exchanged with the high-temperature water for cooling and condensing. The high-temperature water h heated at 50 to 100°C by the condenser 18 is supplied to the supply destination A. At the supply destination A, the high-temperature water h is used for heating, hot-water supply, a heat source for industrial process, washing, disinfection, snow melting, or the like.

The condensed NH₃ refrigerant liquid is depressurized by the expansion valve 20 and heat-exchanged with the refrigerant gas r2 supplied from the low-pressure side heat pump unit 40 in the cascade condenser 22 for gasification. On the exit side of the circulation path 34 of the condenser 18, a temperature sensor 36 that detects the temperature of the high-temperature water h is provided.

A controller 66 receives a detection value from the temperature sensor 36. In addition, the controller 66 can control the operation of the inlet valve of the reciprocating compressor 16 to control the number of operation cylinders and can control the inverter 26 to control the speed of the revolutions of the reciprocating compressor 16. Moreover, the controller 66 can control a drive motor 45 of the compressor 44 via an inverter (not shown) and can control the opening degrees of the expansion valves 20 and 50 and the flow regulation valve 64.

Further, a cooler 32 is provided on an outlet path 14b between the multi-cylinder type reciprocating compressor 16 and the condenser 18. Cooling water c is circulated inside the cooler 32, and the NH₃ refrigerant gas passing through the cooler 32 is cooled by the cooling water c to depressurize the NH₃ refrigerant gas.

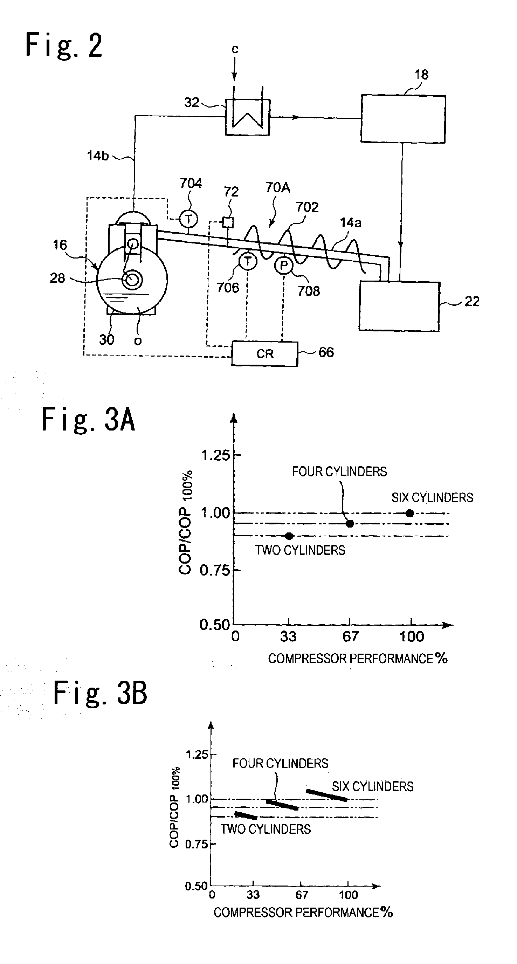

Furthermore, as shown in FIG. 2, a heating mechanism 70A is provided on the inlet path 14a of the reciprocating compressor 16. In FIG. 2, the heating mechanism 70A is composed of an inlet pipe constituting the inlet path 14a, a heat retaining member 702 that includes a heater therein and covers the inlet pipe, a temperature sensor 704 that detects the temperature of the inlet pipe, and a temperature sensor 706 and a pressure sensor 708 that respectively detect the temperature and the pressure of the NH₃ refrigerant gas flowing through the inlet pipe. Furthermore, the inlet pipe is provided with a shut-off valve 72 that shuts off the inlet pipe at the stop of the heat pump unit 10. The detection values of these sensors are input to the controller 66, and the operation of the shut-off valve 72 is controlled by the controller 66.

Under such a configuration, the heat pump unit 10A is operated by the control of the speed of the revolutions of the drive motor 24 and the number of the cylinders of the reciprocating compressor 16 with the controller 66. As shown in FIG. 3A, if the speed of the revolutions of the multi-cylinder type reciprocating compressor 16 is fixed and the temperature of the high-temperature water h detected by the temperature sensor 36 is controlled so as to fall within a setting range based on only the cylinder-number control, the capacity of the multi-cylinder type reciprocating compressor 16 is controlled stepwise. For example, in a case in which control is made so as to increase and decrease two of the cylinders of the multi-cylinder type reciprocating compressor 16, the multi-cylinder type reciprocating compressor 16 is controlled stepwise so as to have a capacity of 100%, 67%, and 33%. In the horizontal axis of FIGS. 3A to 3C, the performance of the multi-cylinder type reciprocating compressor 16 under the maximum allowable speed of the revolutions and an operation with all the cylinders is set as 100%. In the vertical axis, the COP is set at 1 under a capacity of 100%.

As shown in FIG. 3A, if the detection value of the temperature sensor 36 is controlled so as to fall within a setting range based on only the cylinder-number control, the detection value does not successfully fall within the setting range, which may cause hunting. FIG. 3B shows the control method of the embodiment in which the cylinder-number control and the revolution-speed control are combined together. In a state in which the compressor has a capacity of 100%, the speed of the revolutions of the compressor is decreased. Then, the speed of the revolutions of the compressor is decreased under the operation with all the cylinders until the capacity corresponding to the minimum speed of the revolutions at which the lubrication performance of the reciprocating compressor 16 can be maintained by the lubrication oil pump 28. In this manner, the capacity control is made. If the capacity is further decreased, the number of the operation cylinders is decreased to four but the speed of the revolutions of each of the cylinders is increased instead. Since the COP of the reciprocating compressor can be improved with low speed of the revolutions, the reciprocating compressor is operated with low speed of the revolutions as much as possible.

It is assumed that the maximum allowable speed of the revolutions is set at 1500 rpm and the minimum speed of the revolutions is set at 900 rpm under the operation with the six cylinders. At this time, the maximum allowable speed of the revolutions under the operation with four of the cylinders is set to be less than the minimum speed of the revolutions by several percents under the operation with the six cylinders, whereby the capacity of the compressor can be continuously PID-controlled regardless of a change in the number of the cylinders. The same setting is also made when shifting from the operation with four of the cylinders to the operation with two of the cylinders.

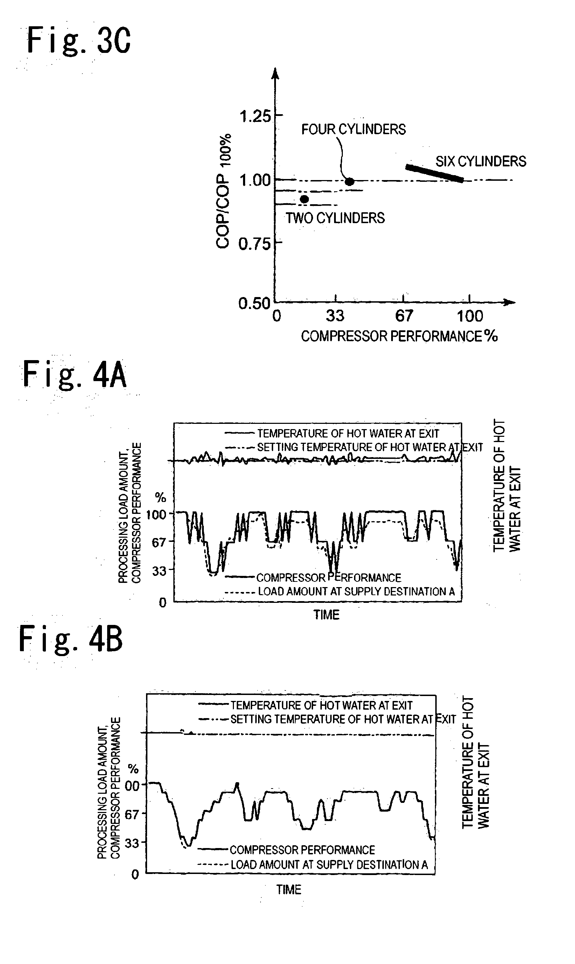

FIG. 3C shows the exceptional operation method of a case in which a high-load operation is continued for a long period of time due to a demand for hot water and a low-load operation is required to be continued even if there is no demand for hot water. In this case, the revolution-speed control is made during the operation with the six cylinders, and the reciprocating compressor is operated only with the minimum speed of the revolutions under the operation with four of the cylinders and the operation with two of the cylinders. Thus, it becomes possible to perform the operation with high COP.

According to the embodiment, the temperature of the high-temperature water h is detected by the temperature sensor 36, and the speed of the revolutions and the number of the cylinders of the reciprocating compressor 16 are controlled such that the detected value falls within a setting range. In addition, during the operation, the heating mechanism 70A is operated in advance so as to prevent the NH₃ refrigerant gas from being liquefied according to fluctuations in the pressure of NH₃ refrigerant gas together with the detection of the temperature sensors 704 and 706 and the pressure sensor 708. At the start of the heat pump unit 10A, the heating mechanism 70A is also operated in advance to perform temperature control. At the stop of the operation of the heat pump unit 10A, the inlet path 14a is shut off by the shut-off valve 72 to prevent liquefied refrigeration flow at the start. For example, the liquefaction of the refrigerant on the side of the reciprocating compressor 16 is prevented at the start if the circulation of the cold water w serving as the heat source of the evaporator 54 is not stopped due to a special reason on the side of the refrigerant unit, the high-pressure side heat pump unit 12 is stopped, and the temperature of the refrigerant is decreased from the side of the evaporator 54.

Moreover, before the start of the reciprocating compressor 16, the cooler 32 is operated in advance to decrease the refrigerant pressure of the outlet path 14b. Thus, the start torque of the reciprocating compressor 16 can be decreased.

Further, by the control of the opening degree of the flow regulation valve 64 with the controller 66, the condensing pressure of the condenser 46 is regulated. Furthermore, by the control of the condensing pressure of the refrigerant gas of the low-pressure side heat pump unit 40 in the cascade condenser 22, the operation conditions of the high-pressure side heat pump unit 12 required to make the temperature of the high-temperature water h fall into a setting range can be ensured.

FIGS. 4A and 4B show an operation example of a case in which the control is made so as to increase and decrease two of the cylinders in the reciprocating compressor having the six cylinders. FIG. 4A shows an example as a comparative example in which only the cylinder-number control is made, and FIG. 4B shows an example of the embodiment in which the cylinder-number control and the revolution-speed control are made in combination. The control is targeted at the temperature of the hot water at the exit of the condenser 18. In FIG. 4A, the performance of the reciprocating compressor 16 changes stepwise relative to continuous changes in the load of the supply destination A with time. The temperature of the hot water at the exit fluctuates relative to a setting temperature, which results in a deviation. In addition, hunting is caused in the capacity of the reciprocating compressor 16 depending on the amount of the load of the supply destination A.

In FIG. 4B, the performance of the reciprocating compressor 16 continuously follows continuous changes in the load of the supply destination A with time, and the load of the supply destination A and the performance of the compressor almost correspond to each other. Therefore, there is almost no deviation between the temperature of the hot water at the exit and the setting temperature.

According to the embodiment, the capacity of the reciprocating compressor 16 can be continuously PID-controlled based on the combination of the revolution-speed control and the cylinder-number control of the reciprocating compressor 16 according to changes in the load of the use destination A. Therefore, the temperature of the high-temperature water h can be caused to accurately fall into the setting range. Accordingly, high-temperature water at 50 to 100° can be continuously supplied to the supply destination A at all times. In addition, since the opening degree of the flow regulation valve 64 is controlled by the controller 66 to regulate the condensing pressure of the condenser 46 of the low-pressure side heat pump unit 40, the operation of the high-pressure side heat pump unit 12 for adjusting the temperature of the high-temperature water h to the setting temperature can be facilitated.

Moreover, since the inlet path 14a of the reciprocating compressor 16 is maintained at temperature not less than the saturation temperature of the NH₃ refrigerant by the heating mechanism 70A during the operation or at the start, the NH₃ refrigerant gas is not liquefied and the liquefied refrigeration flow of the refrigerant liquid to the reciprocating compressor 16 is not caused. Thus, abnormal abrasion at the sliding part of the compressor and the foaming of lubricating oil at the start of the compressor can be prevented. Further, since the inlet pipe is shut off by the shut-off valve 72 at the stop of the heat pump unit 10A, the liquefied refrigeration flow is not caused even at the stop.

Furthermore, since the cascade condenser 22 is arranged in parallel with the condenser 46 of the low-pressure side heat pump unit 40 and the flow of the refrigerant to be supplied to the condenser 46 is regulated by the flow regulation valve 64, the amount of the refrigerant gas to be supplied to the cascade condenser 22 can be regulated by the flow regulation valve 64 regardless of changes in the operation conditions of the low-pressure side heat pump unit 40. Therefore, in the summer, some of the condensing load of the low-pressure side heat pump unit 40 is born and lightened by the cascade condenser 22 and the condensing temperature of the refrigerant of the condenser 46 is decreased while the heat source of the high-pressure side heat pump unit 12 is ensured. Thus, it becomes possible to perform a high-efficiency operation with improved COP.

In the winter, the condensing load of the low-pressure side heat pump unit 40 is decreased by the high-pressure side heat pump unit 12, and the ratio of the amount of heat to be used as the heat source of the high-pressure side heat pump unit 12 out of the amount of heat retained in the condensed refrigerant liquid of the low-pressure side heat pump unit 40 is increased. Thus, it becomes possible to perform the high-efficiency operation of the heat pump unit 10.

Accordingly, in a case in which the temperature of the NH₃ refrigerant at the exit of the condenser 18 is variably controlled and operated so as to be increased in the heat pump unit 12, the condensing load is controlled in parallel with the low-pressure side heat pump unit 40. Thus, the temperature of the condensed liquid of the low-pressure side heat pump unit 40 heat-exchanged with the cascade condenser 22 is increased, which facilitates the high-efficiency operation. With the planned control of these operation conditions in the summer and the winter, the total operation efficiency of the heat pump unit 10 can be optimized throughout the year. Thus, since the temperature of the heat source corresponding to the initial condensing pressure of the heat pump unit 10 can be ensured, the heat-receiving fluid can be heated at the initial temperature.

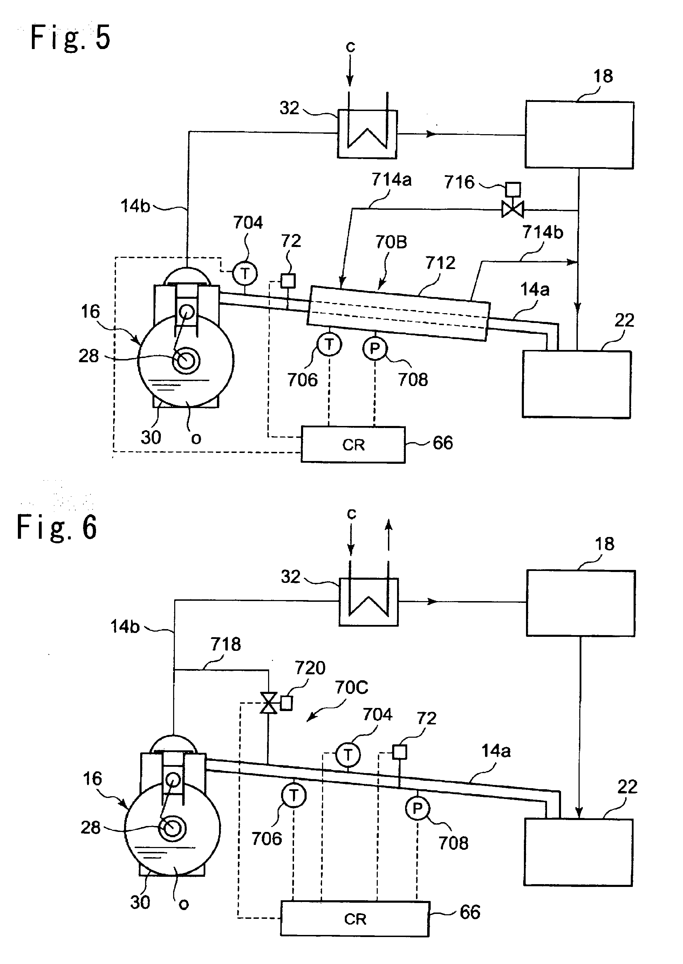

Next, a description will be given of a modified example of the heating mechanism 70A based on FIG. 5. A heating mechanism 70B is structured so as to dualize an inlet pipe constituting the inlet path 14a. That is, the inlet pipe is used as an inner pipe, an outer pipe 712 is provided on the outside of the inner pipe, and branch pipes 714a and 714b that connect the condenser 18 and the outer pipe 712 to each other are provided. The branch pipe 714a is provided with an opening and closing valve 716 controlled to be opened and closed by the controller 66. Other configurations are the same as those of the heating mechanism 70A.

In the heating mechanism 70B, the condensed refrigerant liquid at high temperature is introduced from the condenser 18 into the outer pipe 712 as required to heat the inlet pipe. Since the heating mechanism 70B uses heat retained in the refrigerant liquid as a heat source, there is an advantage in that no special energy source is required. In addition, since the refrigerant liquid is supercooled by heat exchange in the inlet path 14a, contribution is made to an improvement in the COP of the heat pump unit 10A.

Next, a description will be given of still another modified example of the heating mechanism 70A based on FIG. 6. A heating mechanism 70C shown in FIG. 6 is provided with a bypass 718 that connects the inlet path 14a and the outlet path 14b of the reciprocating compressor 16 to each other, and the bypass 718 is provided with an opening and closing valve 720 controlled to be opened and closed by the controller 66. Other configurations are the same as those of the heating mechanism 70A.

In the heating mechanism 70C, the opening and closing valve 720 is opened as required to introduce the outlet refrigerant gas into the inlet path 14a to heat the inlet path 14a. Since the heating mechanism 70C can use the sensible heat of the outlet refrigerant gas as a heat source by directly introducing the outlet refrigerant gas into the inlet path 14a, there is an advantage in that the heating efficiency can be improved.

Note that this modified example may be configured such that the bypass 718 is spirally arranged around the inlet path 14a, the inlet path 14a is heated by the sensible heat of the outlet refrigerant gas, and the heated outlet refrigerant gas is returned to the outlet path 14b. Alternatively, the modified example may be configured such that the inlet pipe is of the dual-pipe structure as shown in FIG. 5, the bypass 718 is connected to the outer pipe to introduce the outlet refrigerant gas to heat the inner pipe with the sensible heat of the outlet refrigerant gas, and the heated outlet refrigerant gas is returned to the outlet path 14b. Under such configuration examples, the pressure of the refrigerant gas of the outlet path 14b is required to be increased by ΔP the pressure loss caused when the refrigerant gas passes through the bypass 718. To this end, a diaphragm is provided on the outlet path 14b downstream of the branch part of the bypass 718 to increase the pressure of the outlet refrigerant gas, and a connection part for the returned refrigerant gas is provided on the outlet path 14b downstream of the diaphragm.

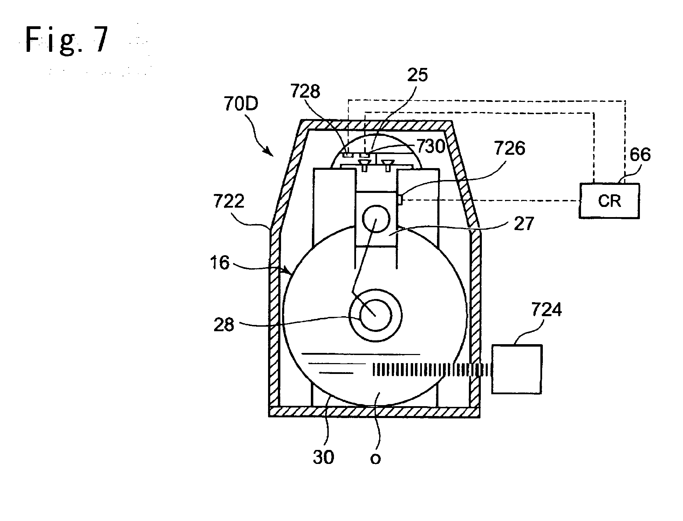

Next, a description will be given of still another modified example of the heating mechanism 70A based on FIG. 7. A heating mechanism 70D has a detachable heat-insulating jacket 722 that covers all of a head cover 25, components 27 such as a compression mechanism, pistons, and a cylinder sleeve, the lubrication oil pump 28, and the crankcase 30 each constituting the reciprocating compressor 16; an oil heater 724 that humidifies lubricating oil inside the crankcase 30; a temperature sensor 726 that detects the temperature of a cylinder wall; a pressure sensor 728 that detects the pressure of the inlet refrigerant gas; and a temperature sensor 730 that detects the temperature of the inlet refrigerant gas. The detection values of these sensors are input to the controller 66. In addition, the temperature sensor 706 and the pressure sensor 708 (not shown) that respectively detect the temperature and the pressure of the refrigerant gas inside the inlet pipe are provided.

According to the heating mechanism 70D, the reciprocating compressor 16 can be entirely humidified with a simple and low-cost unit. In addition, since the heat-insulating jacket 722 is detachable, it may be installed as required and is thus easily handled.

The heat-insulating jacket 722 entirely humidifies the reciprocating compressor 16 to prevent the liquefaction of the refrigerant gas inside the compressor with ambient temperature after the reciprocating compressor is stopped. With the conduction of heat from the lubricating oil o inside the crankcase 30 maintained at constant high temperature by the oil heater 724, by means of the controller 66 the entire compressor including inner equipment and the head cover 25 is maintained at temperature not less than the saturation temperature of the pressure of the refrigerant gas inside the compressor in the stopped state to prevent the liquefaction of the refrigerant. Thus, a decrease in hydraulic pressure due to the foaming of refrigerating-machine oil at the normal start of the reciprocating compressor is prevented, and damage on the components of the compressor due to the interposition of the refrigerant liquid is prevented.

In the first embodiment, the number of the operation cylinders includes but not limited to six, four, and two based on the cylinder-number control of the reciprocating compressor 16 and may include odd numbers or integers.

In the first embodiment, the heat source of the cascade condenser 22 may include, besides the refrigerant liquid supplied from the low-pressure side heat pump unit 40, the waste heat of process fluid, hot water exhausted from a cooling tower, sewage processing water, hot water exhausted from an air conditioner, waste steam, or the like of an adjacent plant and natural heat retained in hot-spring heat, lake water, river water, seawater, groundwater, soil, outside air, or the like.

### (Second Embodiment)

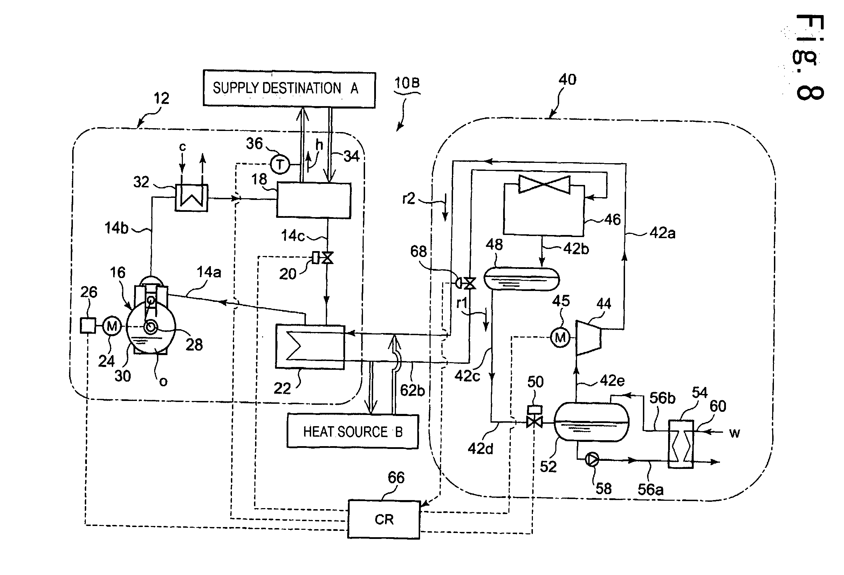

Next, a description will be given of a second embodiment of the method and the unit of the present invention based on FIG. 8. In a heat pump unit 10B of the embodiment, the outlet refrigerant gas of the compressor 44 is directly introduced into the cascade condenser 22 via the outlet path 42a by the low-pressure side heat pump unit 40. In addition, the branch pipe 62b that returns the heat-exchanged refrigerant from the cascade condenser 22 is connected to the condenser 46. Moreover, the branch pipe 62b is provided with an outlet pressure regulation valve 68 whose opening degree is controlled by the controller 66. That is, the cascade condenser 22 is arranged in series upstream of the condenser 46. Other configurations are the same as those of the first embodiment.

According to the embodiment, the cascade condenser 22 is arranged in series upstream of the condenser 46. Therefore, even if the capacity of the low-pressure side heat pump unit 40 is small, performance for supplying a heat source to the high-pressure side heat pump unit 12 besides the sensible heat portion of overheat refrigerant gas can be sufficiently ensured. Accordingly, the higher-temperature water h can be produced by the high-pressure side heat pump unit 12. In addition, the condensing pressure of the condenser 46 of the low-pressure side heat pump unit 40 is regulated by the outlet pressure regulation valve 68 to decrease the condensing pressure of the condenser 46. Thus, since the condensing temperature is decreased, the COP of the low-pressure side heat pump unit 40 can be improved.

### (Third Embodiment)

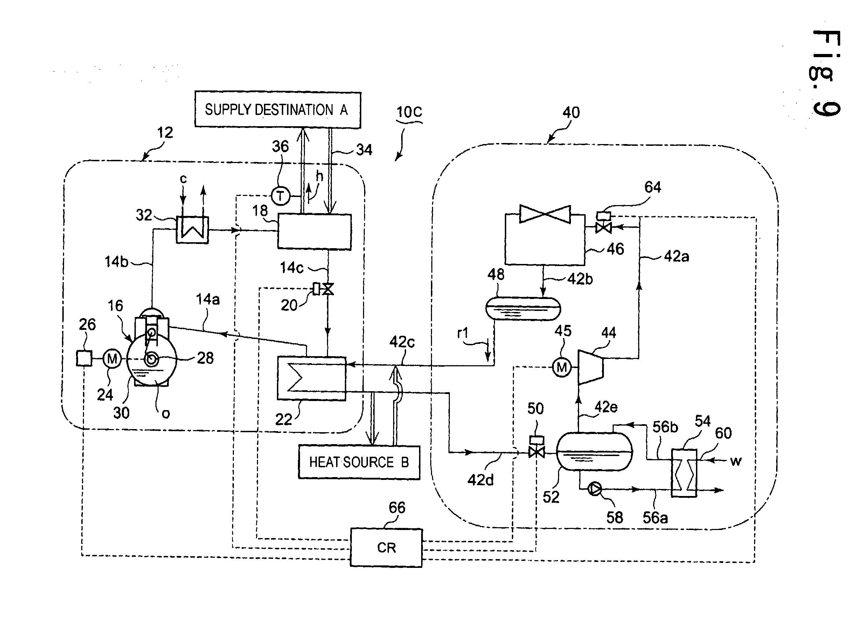

Next, a description will be given of a second embodiment of the method and the unit of the present invention based on FIG. 9. In a heat pump unit 10C of the embodiment, the refrigerant gas outlet from the compressor 44 is condensed by the condenser 46 and then temporarily stored in the receiver 48. The refrigerant liquid r1 stored in the receiver 48 is sent to the cascade condenser 22 via the refrigerant circulation path 42c and used as the heat source of the high-pressure side heat pump unit 12. After being used as the heat source in the cascade condenser 22, the refrigerant liquid r1 is returned to the surge drum 52 via the refrigerant circulation path 42d. Other configurations are the same as those of the first embodiment.

Besides the function and the effect achieved according to the first embodiment, the embodiment can enhance the refrigeration effect of the low-pressure side heat pump unit 40 in a manner in which the refrigerant liquid r1 is supercooled by the use of the refrigerant liquid r1 condensed in the low-pressure side heat pump unit 40 as the heat source of the high-pressure side heat pump unit 12.

Note that any of the first to third embodiments refers to a case in which the high-temperature water h at desired temperature is produced by the condenser 18, but the present invention is not limited thereto and can also be applied to a case in which low-temperature water at desired temperature or other low-temperature refrigerants are produced by the evaporator 54.

### INDUSTRIAL APPLICABILITY

According to the present invention, a heat pump unit that uses an NH₃ refrigerant can stably supply high-temperature fluid or low-temperature fluid at desired temperature for various purposes at all times without degrading the COP regardless of fluctuations in the load and the surrounding environment.

## Claims

1. A method for controlling an operation of a heat pump unit (10A,) that uses NH3 as a refrigerant, has a compressor (16, 44), a condenser (18, 46), an expansion valve (20, 50), and an evaporator (54), and constitutes a heat pump cycle, the compressor being a reciprocating compressor (16) having a plurality of cylinders, a drive motor (24, 45) that drives pistons of the cylinders, and also having a lubrication oil pump (28) driven by the drive motor (24, 45), the method comprising:
a first step of detecting temperature of heat-exchanging fluid at an exit of the condenser (18) or the evaporator (54), the heat-exchanging fluid being heat-exchanged with the NH3 refrigerant at the condenser or the evaporator;
a second step of maintaining the temperature of the heat-exchanging fluid at the exit of the condenser (18) or the evaporator (54) to be within a setting range by control of, under an operation with all the cylinders, capacity of the reciprocating compressor in a period between a maximum allowable load and a minimum load for lubrication, at which a flow of a lubrication oil pump is capable of being ensured, based on revolution-speed control of the drive motor (24) that drives the reciprocating compressor (16); and
a third step of maintaining the temperature of the heat-exchanging fluid at the exit of the condenser (18) or the evaporator (54) to be within the setting range by control of the capacity of the reciprocating compressor (16) at the minimum load for lubrication or less based on a combination of control of decreasing the number of operation cylinders and the revolution-speed control of the drive motor (24).

2. The method for controlling the operation of the heat pump unit according to claim 1, comprising:
a fourth step of maintaining the NH3 refrigerant flowing into a refrigerant inlet path (14a) at temperature not less than a saturation temperature by a heating mechanism provided on the refrigerant inlet path (14a) of the reciprocating compressor (16) in order to prevent liquefied refrigeration flow of the NH3 refrigerant to the reciprocating compressor (16).

3. The method for controlling the operation of the heat pump unit according to claim 1 or 2, wherein the inlet path (14a) is shut off at a stop of the heat pump unit by a shut-off valve (72) provided on the inlet path (14a) of the reciprocating compressor in order to prevent the liquefied refrigeration flow at a start of the reciprocating compressor.

4. The method for controlling the operation of the heat pump unit according to any of claims 1 or 3, comprising:
a fifth step of making, at a stop of the reciprocating compressor (16), pressure of high-pressure refrigerant gas of an outlet path (14b) of the reciprocating compressor (16) equal to pressure on a side of the evaporator (54) in order to prevent liquefaction at a high-pressure part of the reciprocating compressor (16).

5. The method for controlling the operation of the heat pump unit according to any of claims 1 or 3, comprising:
a sixth step of making, at the start of the reciprocating compressor (16), pressure of high-pressure refrigerant gas of an outlet path (14b) of the reciprocating compressor (16) equal to pressure on a side of the evaporator (54) in order to decrease a start torque of the reciprocating compressor (16).

6. A unit for controlling an operation of a heat pump unit that uses NH3 as a refrigerant, has a compressor (16), a condenser (18), an expansion valve (20), and an evaporator (54), and constitutes a heat pump cycle,
the compressor being a reciprocating compressor (16) having a plurality of cylinders, a drive motor (24) that drives pistons of the cylinders, and also having a lubrication oil pump (28) driven by the drive motor (24),
the heat pump unit comprising:
a temperature sensor (36) that detects temperature of heat-exchanging fluid at an exit of the condenser (18) or the evaporator (54), the heat-exchanging fluid being heat-exchanged with the NH3 refrigerant at the condenser (18) or the evaporator (54); and
a controller (66) that maintains the temperature of the heat-exchanging fluid at the exit of the condenser (18) or the evaporator (54) to be within a setting range by controlling capacity of the reciprocating compressor (16) in a period between a maximum allowable load and a minimum load for lubrication, at which a lubrication state of the reciprocating compressor (16) is capable of being ensured with a flow of the lubrication oil pump, based on revolution-speed control of the drive motor (24) that drives the reciprocating compressor (16) and by controlling the capacity of the reciprocating compressor at the minimum load for lubrication or less based on a combination of the revolution-speed control of the drive motor (24) and cylinder-number control.

7. The unit for controlling the operation of the heat pump unit according to claim 6, wherein a heating mechanism is provided on a refrigerant inlet path (14a) of the reciprocating compressor (16) to maintain the NH3 refrigerant flowing into the refrigerant inlet path (14a) at temperature not less than saturation temperature thereby preventing liquefied refrigeration flow of the NH3 refrigerant to the reciprocating compressor (16).

8. The unit for controlling the operation of the heat pump unit according to claim 7, wherein the heating mechanism is a heater provided on the inlet path (14a) of the reciprocating compressor (16).

9. The unit for controlling the operation of the heat pump unit according to claim 7, wherein the heating mechanism has the inlet path (14a) of the reciprocating compressor (16) formed into a dual-pipe structure, introduces refrigerant gas outlet from the reciprocating compressor or a refrigerant liquid on a side of the exit of the condenser into an outer pipe (712) of the dual-pipe structure, and heats the inlet path (14a) with heat retained in the refrigerant gas or the refrigerant liquid.

10. The unit for controlling the operation of the heat pump unit according to claim 7, wherein the heating mechanism causes part of refrigerant gas outlet from the reciprocating compressor to be divided and poured into the inlet path (14a) thereby heating the inlet path (14a) with heat retained in the refrigerant gas.

11. The unit for controlling the operation of the heat pump unit according to claim 7, wherein the heating mechanism covers the reciprocating compressor (16) with a detachable heat-insulating jacket (722).

12. The unit for controlling the operation of the heat pump unit according to claim 6, wherein a pressure-equalizing mechanism is provided that makes pressure of high-pressure refrigerant gas in an outlet path (14b) of the reciprocating compressor (16) equal to pressure on a side of the evaporator (54) at a stop or start of the reciprocating compressor (16).

13. The unit for controlling the operation of the heat pump unit according to claim 12, wherein the pressure-equalizing mechanism has a heat exchanger provided on the outlet path (14b) of the reciprocating compressor (16) or the condenser (18), causes a cooling medium to flow into the exchanger at the stop of the heat pump unit, and condenses and liquefies the refrigerant gas to decrease the pressure of the refrigerant gas of the outlet path (14b).

14. The unit for controlling the operation of the heat pump unit according to claim 6, wherein
a second heat pump unit (40) having a heat-pump-cycle constituting apparatus is provided, the evaporator (54) is incorporated in a high-pressure side refrigerant path of the second heat pump unit (40) to be constituted as a cascade condenser (22) that uses heat retained in a refrigerant of the second heat pump unit as a heat source,
and
pressure of the high-pressure side refrigerant path of the second heat pump unit (40) is regulated in order to maintain the temperature of the heat-exchanging fluid at the exit of the condenser (18) to be within the setting range.

15. The unit for controlling the operation of the heat pump unit according to claim 14, wherein a condensed refrigerant liquid of the second heat pump unit (40) is supercooled by the cascade condenser (22), and the supercooled refrigerant liquid is caused to return to a low-pressure side refrigerant circulation path of the second heat pump unit (40).

16. The unit for controlling the operation of the heat pump unit according to claim 14, wherein the cascade condenser (22) is arranged in parallel with a condenser of the second heat pump unit (40), and a flow of the refrigerant of the condenser is regulated to regulate condensing pressure of the condenser (22).

17. The unit for controlling the operation of the heat pump unit according to claim 14, wherein the cascade condenser (22) is arranged in series between the condenser of the second heat pump unit (40) and the compressor, and either a flow of the refrigerant of the condenser is regulated or condensing pressure of the condenser is regulated by an outlet pressure regulation valve (68) provided between the cascade condenser and the condenser.

## Patentansprüche

1. Verfahren zum Steuern eines Betriebs eines Wärmepumpenaggregats (10A), das NH3 als ein Kältemittel verwendet, einen Kompressor (16, 44), einen Kondensator (18, 46), ein Expansionsventil (20, 50) und einen Verdampfer (54) aufweist und einen Wärmepumpenzyklus bildet, wobei der Kompressor ein Kolbenkompressor (16) ist, der mehrere Zylinder aufweist, einen Antriebsmotor (24, 45), der Kolben der Zylinder antreibt, und auch eine Schmierölpumpe (28) aufweist, die durch den Antriebsmotor (24, 45) angetrieben wird, wobei das Verfahren Folgendes umfasst:
einen ersten Schritt zum Ermitteln der Temperatur von Wärmeaustauschfluid an einem Ausgang des Kondensators (18) oder des Verdampfers (54), wobei das Wärmeaustauschfluid im Wärmeaustausch mit dem NH3-Kältemittel an dem Kondensator oder dem Verdampfer steht;
einen zweiten Schritt zum Halten der Temperatur des Wärmeaustauschfluids am Ausgang des Kondensators (18) oder des Verdampfers (54), um innerhalb eines Einstellbereichs zu sein, durch Steuerung der Kapazität des Kolbenkompressors unter einem Betrieb mit allen Zylindern in einem Zeitraum zwischen einer maximal zulässigen Last und einer Mindestlast für die Schmierung, bei der eine Strömung einer Schmierölpumpe gewährleistet werden kann, auf der Grundlage einer Drehzahlsteuerung des Antriebsmotors (24), der den Kolbenkompressor (16) antreibt; und
einen dritten Schritt zum Halten der Temperatur des Wärmeaustauschfluids am Ausgang des Kondensators (18) oder des Verdampfers (54) innerhalb des Einstellbereichs durch Steuerung der Kapazität des Kolbenkompressors (16) bei der Mindestlast für die Schmierung oder niedriger auf der Grundlage einer Kombination von Steuerung zum Vermindern der Anzahl der Betriebszylinder und der Drehzahlsteuerung des Antriebsmotors (24).

2. Verfahren zum Steuern des Betriebs des Wärmepumpenaggregats nach Anspruch 1, das Folgendes umfasst:
einen vierten Schritt zum Halten des NH3-Kältemittels, das in einen Kältemittel-Einlassweg (14a) strömt, bei einer Temperatur, die nicht niedriger ist als eine Sättigungstemperatur, durch einen Heizmechanismus, der auf dem Kältemittel-Einlassweg (14a) des Kolbenkompressors (16) bereitgestellt ist, um eine verflüssigte Kühlungsströmung des NH3-Kältemittels zum Kolbenkompressor (16) zu verhindern.

3. Verfahren zum Steuern des Betriebs des Wärmepumpenaggregats nach Anspruch 1 oder 2, wobei der Einlassweg (14a) bei einem Stopp des Wärmepumpenaggregats durch ein Absperrventil (72) abgesperrt wird, das auf dem Einlassweg (14a) des Kolbenkompressors bereitgestellt ist, um die verflüssigte Kühlungsströmung bei einem Start des Kolbenkompressors zu verhindern.

4. Verfahren zum Steuern des Betriebs des Wärmepumpenaggregats nach einem der Ansprüche 1 oder 3, das Folgendes umfasst:
bei einem Stopp des Kolbenkompressors (16), einen fünften Schritt zum Erzeugen von Druck des Hochdruck-Kältemittelgases eines Auslasswegs (14b) des Kolbenkompressors (16) gleich dem Druck auf einer Seite des Verdampfers (54), um die Verflüssigung an einem Hochdruckteil des Kolbenkompressors (16) zu verhindern.

5. Verfahren zum Steuern des Betriebs des Wärmepumpenaggregats nach einem der Ansprüche 1 oder 3, das Folgendes umfasst:
beim Start des Kolbenkompressors (16), einen sechsten Schritt zum Erzeugen von Druck von Hochdruck-Kühlmittelgas eines Auslasswegs (14b) des Kolbenkompressors (16) gleich dem Druck auf einer Seite des Verdampfers (54), um ein Anlaufdrehmoment des Kolbenkompressors (16) zu verringern.

6. Einheit zur Steuerung eines Betriebs eines Wärmepumpenaggregats, das NH3 als ein Kältemittel verwendet, einen Kompressor (16), einen Kondensator (18), ein Expansionsventil (20) und einen Verdampfer (54) aufweist und einen Wärmepumpenzyklus bildet,
wobei der Kompressor ein Kolbenkompressor (16) ist, der mehrere Zylinder aufweist, einen Antriebsmotor (24), der Kolben der Zylinder antreibt, und auch eine Schmierölpumpe (28) aufweist, die durch den Antriebsmotor (24) angetrieben wird,
wobei das Wärmepumpenaggregat Folgendes umfasst:
einen Temperatursensor (36), der die Temperatur des Wärmeaustauschfluids an einem Ausgang des Kondensators (18) oder des Verdampfers (54) ermittelt, wobei das Wärmeaustauschfluid im Wärmeaustausch mit dem NH3-Kältemittel an dem Kondensator (18) oder dem Verdampfer (54) steht; und
eine Steuereinrichtung (66), die die Temperatur des Wärmeaustauschfluids am Ausgang des Kondensators (18) oder des Verdampfers (54) durch Steuern der Kapazität des Kolbenkompressors (16) in einem Zeitraum zwischen einer maximal zulässigen Last und einer Mindestlast für die Schmierung, bei der ein Schmierzustand des Kolbenkompressors (16) mit einer Strömung der Schmierölpumpe gewährleistet werden kann, auf der Grundlage der Drehzahlsteuerung des Antriebsmotors (24), der den Kolbenkompressor (16) antreibt, und durch Steuern der Kapazität des Kolbenkompressors bei der Mindestlast für die Schmierung oder niedriger auf der Grundlage einer Kombination der Drehzahlsteuerung des Antriebsmotors (24) und der Steuerung der Anzahl der Zylinder innerhalb eines Einstellbereichs hält.

7. Einheit zur Steuerung des Betriebs des Wärmepumpenaggregats nach Anspruch 6, wobei ein Heizmechanismus auf einem Kühlmittel-Einlassweg (14a) des Kolbenkompressors (16) bereitgestellt wird, um das NH3-Kältemittel, das in den Kältemittel-Einlassweg (14a) strömt, bei einer Temperatur zu halten, die nicht niedriger als die Sättigungstemperatur ist, wodurch eine verflüssigte Kältemittelströmung des NH3-Kältemittels zum Kolbenkompressor (16) verhindert wird.

8. Einheit zur Steuerung des Betriebs des Wärmepumpenaggregats nach Anspruch 7, wobei der Heizmechanismus ein Heizgerät ist, das auf dem Einlassweg (14a) des Kolbenkompressors (16) bereitgestellt ist.

9. Einheit zur Steuerung des Betriebs des Wärmepumpenaggregats nach Anspruch 7, wobei der Heizmechanismus den Einlassweg (14a) des Kolbenkompressors (16) in einer Zweileitungsstruktur gebildet aufweist, Kältemittelgas, das von dem Kolbenkompressor ausgelassen wird, oder eine Kältemittelflüssigkeit auf einer Seite des Ausgangs des Kondensators in eine äußere Leitung (712) der Zweileitungsstruktur einführt und den Einlassweg (14a) mit Wärme erwärmt, die in dem Kältemittelgas oder der Kältemittelflüssigkeit gehalten wird.

10. Einheit zur Steuerung des Betriebs des Wärmepumpenaggregats nach Anspruch 7, wobei der Heizmechanismus bewirkt, dass ein Teil des Kältemittelgases, das von dem Kolbenkompressor ausgelassen wird, geteilt und in den Einlassweg (14a) gegossen wird, wodurch der Einlassweg (14a) mit Wärme erwärmt wird, die in dem Kältemittelgas gehalten wird.

11. Einheit zur Steuerung des Betriebs des Wärmepumpenaggregats nach Anspruch 7, wobei der Heizmechanismus den Kolbenkompressor (16) mit einem abnehmbaren Wärmeisoliermantel (722) abdeckt.

12. Einheit zur Steuerung des Betriebs des Wärmepumpenaggregats nach Anspruch 6, wobei ein Druckausgleichsmechanismus bereitgestellt wird, der beim Stopp oder Start des Kolbenkompressors (16) den Druck eines Hochdruck-Kältemittelgases in einem Auslassweg (14b) des Kolbenkompressors (16) an den Druck auf einer Seite des Verdampfers (54) angleicht.

13. Einheit zur Steuerung des Betriebs des Wärmepumpenaggregats nach Anspruch 12, wobei der Druckausgleichsmechanismus einen Wärmetauscher aufweist, der auf dem Auslassweg (14b) des Kolbenkompressors (16) oder des Kondensators (18) bereitgestellt ist, bewirkt, dass ein Kühlmittel beim Stopp des Wärmepumpenaggregats in den Tauscher strömt und das Kältemittelgas kondensiert und verflüssigt, um den Druck des Kältemittelgases des Auslassweges (14b) zu vermindern.

14. Einheit zur Steuerung des Betriebs des Wärmepumpenaggregats nach Anspruch 6, wobei
ein zweites Wärmepumpenaggregat (40) bereitgestellt ist, das eine einen Wärmepumpenzyklus bildende Vorrichtung aufweist, der Verdampfer (54) in einem Kältemittelweg auf der Hochdruckseite des zweiten Wärmepumpenaggregats (40) aufgenommen ist, um als ein Kaskadenkondensator (22) gebildet zu sein, der Wärme, die in einem Kältemittel des zweiten Wärmepumpenaggregats gehalten wird, als eine Wärmequelle nutzt, und
der Druck des Kältemittelwegs auf der Hochdruckseite des zweiten Wärmepumpenaggregats (40) geregelt wird, um die Temperatur des Wärmeaustauschfluids am Ausgang des Kondensators (18) zu halten, um innerhalb des Einstellbereichs zu sein.

15. Einheit zur Steuerung des Betriebs des Wärmepumpenaggregats nach Anspruch 14, wobei eine kondensierte Kältemittel-Flüssigkeit der zweiten Wärmepumpeneinheit (40) durch den Kaskadenkondensator (22) unterkühlt wird und bewirkt wird, dass die unterkühlte Kältemittelflüssigkeit zu einem Kältemittelumlaufweg auf der Niederdruckseite des zweiten Wärmepumpenaggregats (40) zurückkehrt.

16. Einheit zur Steuerung des Betriebs des Wärmepumpenaggregats nach Anspruch 14, wobei der Kaskadenkondensator (22) parallel mit einem Kondensator des zweiten Wärmepumpenaggregats (40) angeordnet ist und eine Strömung des Kältemittels des Kondensators geregelt wird, um den Kondensationsduck des Kondensators (22) zu regeln.

17. Einheit zur Steuerung des Betriebs des Wärmepumpenaggregats nach Anspruch 14, wobei der Kaskadenkondensator (22) in Reihe zwischen dem Kondensator der zweiten Wärmepumpeneinheit (40) und dem Kompressor angeordnet ist, und entweder eine Strömung des Kältemittels des Kondensators geregelt wird oder der Kondensationsdruck des Kondensators durch ein Auslassdruckregelventil (68) geregelt wird, das zwischen dem Kaskadenkondensator und dem Kondensator bereitgestellt ist.

## Revendications

1. Procédé pour réguler un fonctionnement d'une unité de pompe à chaleur (10A) qui utilise du NH3 en tant que réfrigérant, a un compresseur (16, 44), un condenseur (18, 46), une soupape de dilatation (20, 50) et un évaporateur (54) et constitue un cycle de pompe à chaleur, le compresseur étant un compresseur volumétrique (16) ayant une pluralité de cylindres, un moteur d'entraînement (24, 45) qui entraîne les pistons des cylindres, et ayant également une pompe à huile de lubrification (28) entraînée par le moteur d'entraînement (24, 45), le procédé comprenant :
une première étape consistant à détecter la température du fluide d'échange thermique à une sortie du condenseur (18) ou de l'évaporateur (54), le fluide d'échange thermique étant en échange thermique avec le réfrigérant NH3 au niveau du condenseur ou de l'évaporateur ;
une deuxième étape consistant à maintenir la température du fluide d'échange thermique à la sortie du condenseur (18) ou de l'évaporateur (54) pour être dans une plage de réglage en régulant, lors d'un fonctionnement avec la totalité des cylindres, la capacité du compresseur volumétrique dans une période comprise entre une charge maximum admissible et une charge minimum pour la lubrification, à laquelle un écoulement d'une pompe d'huile de lubrification peut être garanti, en fonction de la régulation de la vitesse de révolution du moteur d'entraînement (24) qui entraîne le compresseur volumétrique (16) ; et
une troisième étape consistant à maintenir la température du fluide d'échange thermique à la sortie du condenseur (18) ou de l'évaporateur (54) pour être dans la plage de réglage en régulant la capacité du compresseur volumétrique (16) à la charge minimum pour la lubrification ou moins, en fonction d'une combinaison de la régulation de réduction du nombre de cylindres de commande et de la régulation de la vitesse de révolution du moteur d'entraînement (24).

2. Procédé pour réguler le fonctionnement de l'unité de pompe à chaleur selon la revendication 1, comprenant :
une quatrième étape consistant à maintenir le réfrigérant NH3 s'écoulant dans une trajectoire d'entrée de réfrigérant (14a) à une température non inférieure à une température de saturation par un mécanisme de chauffage prévu sur la trajectoire d'entrée de réfrigérant (14a) du compresseur volumétrique (16) afin d'empêcher l'écoulement de réfrigération liquéfié du réfrigérant NH3 vers le compresseur volumétrique (16).

3. Procédé pour réguler le fonctionnement de l'unité de pompe à chaleur selon la revendication 1 ou 2, dans lequel la trajectoire d'entrée (14a) est bouchée au niveau d'une butée de l'unité de pompe à chaleur par une soupape d'arrêt (72) prévue sur la trajectoire d'entrée (14a) du compresseur volumétrique afin d'empêcher l'écoulement de réfrigération liquéfié à un démarrage du compresseur volumétrique.

4. Procédé pour réguler le fonctionnement de l'unité de pompe à chaleur selon l'une quelconque des revendications 1 ou 3, comprenant :
une cinquième étape consistant à rendre, au niveau d'une butée du compresseur volumétrique (16), la pression du gaz réfrigérant à haute pression d'une trajectoire de sortie (14b) du compresseur volumétrique (16) égale à la pression sur un côté de l'évaporateur (54) afin d'empêcher la liquéfaction au niveau d'une partie à haute pression du compresseur volumétrique (16).

5. Procédé pour réguler le fonctionnement de l'unité de pompe à chaleur selon l'une quelconque des revendications 1 ou 3, comprenant :
une sixième étape consistant à rendre, au démarrage du compresseur volumétrique (16), la pression du gaz réfrigérant à haute pression d'une trajectoire de sortie (14b) du compresseur volumétrique (16) égale à la pression sur un côté de l'évaporateur (54) afin de diminuer un couple de démarrage du compresseur volumétrique (16).

6. Unité de régulation d'un fonctionnement d'une unité de pompe à chaleur qui utilise du NH3 en tant que réfrigérant, a un compresseur (16), un condenseur (18), une soupape de dilatation (20) et un évaporateur (54) et constitue un cycle de pompe à chaleur,
le compresseur étant un compresseur volumétrique (16) ayant une pluralité de cylindres, un moteur d'entraînement (24) qui entraîne les pistons des cylindres et ayant également une pompe à huile de lubrification (28) entraînée par le moteur d'entraînement (24),
l'unité de pompe à chaleur comprenant :
un capteur de température (36) qui détecte la température du fluide d'échange thermique à une sortie du condenseur (18) ou de l'évaporateur (54), le fluide d'échange thermique étant en échange thermique avec le réfrigérant NH3 au niveau du condenseur (18) ou de l'évaporateur (54) ; et
un organe de commande (66) qui maintient la température du fluide d'échange thermique à la sortie du condenseur (18) ou de l'évaporateur (54) pour être dans une plage de réglage en régulant la capacité du compresseur volumétrique (16) dans une période comprise entre une charge maximum admissible et une charge minimum pour la lubrification, à laquelle un état de lubrification du compresseur volumétrique (16) peut être garanti avec un écoulement de la pompe à huile de lubrification, en fonction de la régulation de la vitesse de révolution du moteur d'entraînement (24) qui entraîne le compresseur volumétrique (16) et en régulant la capacité du compresseur volumétrique à la charge minimum pour la lubrification ou moins en fonction d'une combinaison de la régulation de la vitesse de révolution du moteur d'entraînement (24) et de la régulation du nombre de cylindre.

7. Unité pour réguler le fonctionnement de l'unité de pompe à chaleur selon la revendication 6, dans laquelle un mécanisme de chauffage est prévu sur une trajectoire d'entrée de réfrigérant (14a) du compresseur volumétrique (16) afin de maintenir le réfrigérant NH3 qui s'écoule dans la trajectoire d'entrée de réfrigérant (14a) à une température non inférieure à la température de saturation, empêchant ainsi l'écoulement de réfrigération liquéfiée du réfrigérant NH3 vers le compresseur volumétrique (16).

8. Unité pour réguler le fonctionnement de l'unité de pompe à chaleur selon la revendication 7, dans laquelle le mécanisme de chauffage est un dispositif de chauffage prévu sur la trajectoire d'entrée (14a) du compresseur volumétrique (16).

9. Unité pour réguler le fonctionnement de l'unité de pompe à chaleur selon la revendication 7, dans laquelle le mécanisme de chauffage a la trajectoire d'entrée (14a) du compresseur volumétrique (16) formée dans une structure à double tuyau, introduit le gaz réfrigérant sortant du compresseur volumétrique ou un liquide de réfrigérant sur un côté de la sortie du condenseur dans un tuyau externe (712) de la structure à double tuyau, et chauffe la trajectoire d'entrée (14a) avec la chaleur retenue dans le gaz réfrigérant ou le liquide réfrigérant.

10. Unité pour réguler le fonctionnement de l'unité de pompe à chaleur selon la revendication 7, dans laquelle le mécanisme de chauffage amène une partie du gaz réfrigérant sortant du compresseur volumétrique à être divisée ou versée dans la trajectoire d'entrée (14a), chauffant ainsi la trajectoire d'entrée (14a) avec la chaleur retenue dans le gaz réfrigérant.

11. Unité pour réguler le fonctionnement de l'unité de pompe à chaleur selon la revendication 7, dans laquelle le mécanisme de chauffage recouvre le compresseur volumétrique (16) avec une chemise thermiquement isolante (722) détachable.

12. Unité pour réguler le fonctionnement de l'unité de pompe à chaleur selon la revendication 6, dans laquelle on prévoit un mécanisme d'égalisation de pression qui rend la pression du gaz réfrigérant à haute pression dans une trajectoire de sortie (14b) du compresseur volumétrique (16) égale à la pression sur un côté de l'évaporateur (54) à un arrêt ou un démarrage du compresseur volumétrique (16).

13. Unité pour réguler le fonctionnement de l'unité de pompe à chaleur selon la revendication 12, dans laquelle le mécanisme d'égalisation de pression a un échangeur de chaleur prévu sur la trajectoire de sortie (14b) du compresseur volumétrique (16) ou le condenseur (18), amène un milieu de refroidissement à s'écouler dans l'échangeur à l'arrêt de l'unité de pompe à chaleur, et condense et liquéfie le gaz réfrigérant pour réduire la pression du gaz réfrigérant de la trajectoire de sortie (14b).

14. Unité pour réguler le fonctionnement de l'unité de pompe à chaleur selon la revendication 6, dans laquelle
on prévoit une seconde unité de pompe à chaleur (40) ayant un appareil de constitution de cycle de pompe à chaleur, l'évaporateur (54) est incorporé dans une trajectoire de réfrigérant du côté à haute pression de la seconde unité de pompe à chaleur (40) pour être constitué comme un condenseur en cascade (22) qui utilise la chaleur retenue dans un réfrigérant de la seconde unité de pompe à chaleur en tant que source de chaleur, et
la pression de la trajectoire de réfrigérant du côté à haute pression de la seconde unité de pompe à chaleur (40) est régulée afin de maintenir la température du fluide d'échange thermique à la sortie du condenseur (18) pour être dans la plage de réglage.

15. Unité pour réguler le fonctionnement de l'unité de pompe à chaleur selon la revendication 14, dans laquelle un liquide de réfrigérant condensé de la seconde unité de pompe à chaleur (40) est super refroidi par le condenseur en cascade (22) et le liquide de réfrigérant super refroidi est amené à revenir vers une trajectoire de circulation de réfrigérant du côté à basse pression de la seconde unité de pompe à chaleur (40).

16. Unité pour réguler le fonctionnement de l'unité de pompe à chaleur selon la revendication 14, dans laquelle le condenseur en cascade (22) est agencé en parallèle avec un condenseur de la seconde unité de pompe à chaleur (40) et un écoulement du réfrigérant du condenseur est régulé afin de réguler la pression de condensation du condenseur (22).

17. Unité pour réguler le fonctionnement de l'unité de pompe à chaleur selon la revendication 14, dans laquelle le condenseur en cascade (22) est agencé en série entre le condenseur de la seconde unité de pompe à chaleur (40) et le compresseur, et soit un écoulement du réfrigérant du condenseur est régulé, soit la pression de condensation du condenseur est régulée par une soupape de régulation de pression de sortie (68) prévue entre le condenseur en cascade et le condenseur.
